# EUROPÄISCHE PATENTANMELDUNG

(11) **EP 1 491 548 A1**
(43) Veröffentlichungstag der Anmeldung: **29.12.2004**
(21) Anmeldenummer: 04013067.6
(22) Anmeldetag: 03.06.2004
(51) Int. Cl.: C07F 15/00, B01J 31/18, C07B 53/00, C07B 57/00

(54) **Verfahren zur Reduktion von Ketocarbonsäureestern**

(30) Priorität: 16.06.2003 DE 10326916
(71) Anmelder: Bayer Chemicals AG, 51368 Leverkusen (DE)
(72) Erfinder: Raja, Robert, Dr., CB4 1QL Cambridge (GB); Hanko, Rudolf, Dr., 40239 Düsseldorf (DE)

(57) **Zusammenfassung**

Die vorliegende Erfindung betrifft ein Verfahren zur Herstellung von enantiomerenangereicherten Hydroxycarbonsäureestern aus den entsprechenden Ketocarbonsäureestem sowie dafür verwendbare immobilisierte Übergangsmetallkomplexe.

## Beschreibung

Die vorliegende Erfindung betrifft ein Verfahren zur Herstellung von enantiomerenangereicherten Hydroxycarbonsäureestern aus den entsprechenden Ketocarbonsäureestern sowie dafür verwendbare immobilisierte Übergangsmetallkomplexe.

Enantiomerenangereicherte Hydroxycarhonsäureester sind wertvolle Reagenzien zur Racematspaltung und wichtige Intermediate bei der Herstellung von Arzneimitteln und Agrochemikalien. Üblicherweise werden enantiomerenangereicherte α- und β-Hydroxycarbonsäureester durch homogene katalytische Hydrierung der entsprechenden α- und β-Ketocarbonsäureester gewonnen, wobei als Katalysatoren häufig Übergangsmetallkomplexe mit chiralen Phosphanen als Liganden eingesetzt werden (siehe z.B. Genet et al., Tetrahedron, Asymmetry, 1994, 5(4), 675-690). Nachteilig an homogenen Hydrierungen ist der oft hohe Preis der Liganden und der Metalle, die üblicherweise im industriellen Maßstab nicht mehr wiedergewonnen werden.

Alternativ dazu sind heterogene Verfahren unter Verwendung von mit Chinchona-Alkaloiden oder Weinsäurederivaten modifizierten Platin- oder Nickelkatalysatoren bekannt (T. Mallat et al., Fine Chemicals through Heterogeneous Catalysis, Wiley-VCH, 2001, S. 449 ff).

Darüber hinaus wird für die Hydrierung von Ketoestern in Ferrand et al. (Tetrahedron: Asymmetry, 13, 2002, S. 1379 bis 1384) der Einsatz von Rhodium-, Ruthenium- und Iridium-Komplexen mit chiralen Diaminen beschrieben. Allen Verfahren ist jedoch gemeinsam, dass sie allenfalls einen mäßigen Enantiomerenüberschuss erlauben.

Es bestand daher das Bedürfnis, Katalysatoren bereitzustellen, die insbesondere in einem Verfahren zur Herstellung von enantiomerenangereicherten Hydroxycarbonsäureestem die einfache Wiedergewinnbarkeit bei guter Performance ermöglichen.

Es wurden nun Verbindungen der Formel (I) gefunden, 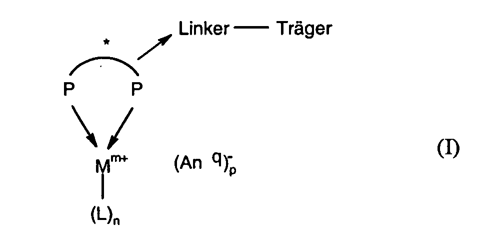 in der 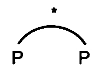 für eine enantiomerenangereicherte, chirale Diphosphorverbindung steht,
- **→**: eine kovalente Bindung der enantiomerenangereicherten, chiralen Diphosphorverbindung zum Linker anzeigt,
- Linker: für einen Rest steht, der sowohl kovalent an enantiomerenangereicherte, chirale Verbindung als auch an den Träger gebunden ist,
- Träger: für ein meso- oder makroporöses Trägermaterial steht,
- (M ^{m+}): für ein Metall mit der Wertigkeit m steht
- L: für einen anionischen oder neutralen Liganden steht
- n: für eins, zwei, drei oder vier steht
- (An ^{q-}): für ein Anion mit der Wertigkeit q steht und
- P: (m - Gesamtladung der anionischen Liganden L)/q ist.

Enantiomerenangereicherte Verbindungen im Sinne der Erfindung sind enantiomerenreine Verbindungen oder Mischungen von Enantiomeren einer Verbindung, in denen ein Enantiomer in einem Enantiomerenüberschuss, im Folgenden auch ee (enantiomeric excess) genannt, im Vergleich zum anderen Enantiomer vorliegt. Bevorzugt beträgt dieser Enantiomerenüberschuss 10 bis 100 % ee, besonders bevorzugt 90 bis 100 % ee und ganz besonders bevorzugt 95 bis 100 % ee.

Im Rahmen der Erfindung können alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Weise kombiniert werden.

Im Folgenden stehen Alkyl beziehungsweise Alkoxy beziehungsweise Alkylen beziehungsweise Alkenylen jeweils unabhängig für einen geradkettigen, cyclischen, verzweigten oder unverzweigten Alkyl- beziehungsweise Alkoxy- beziehungsweise Alkylen- beziehungsweise Alkenylen-Rest, der gegebenenfalls weiter durch C₁-C₄-Alkoxy substituiert sein kann. Gleiches gilt für den nichtaromatischen Teil eines Arylalkyl-Restes.

C₁-C₄-Alkyl steht beispielsweise für Methyl, Ethyl, n-Propyl, iso-Propyl, n-Butyl, sec.-Butyl und tert.-Butyl, C₁-C₈-Alkyl darüber hinaus beispielsweise für n-Pentyl, 1-Methylbutyl, 2-Methylbutyl, 3-Methylbutyl, neo-Pentyl, 1-Ethylpropyl, cyclo-Hexyl, cyclo-Pentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, n-Heptyl und n-Octyl, C₁-C₂₀-Alkyl weiter darüber hinaus beispielsweise für Adamantyl, die isomeren Menthyle, n-Nonyl, n-Decyl und n-Dodecyl.

C₁-C₄-Alkoxy steht beispielsweise für Methoxy, Ethoxy, n-Propoxy, iso-Propoxy, n-Butoxy, sec.-Butoxy und tert.-Butoxy, C₁-C₈-Alkoxy darüberhinaus beispielsweise für n-Pentoxy, 1-Methylbutoxy, 2-Methylbutoxy, 3-Methylbutoxy, neo-Pentoxy, 1-Ethylpropoxy, cyclo-Hexoxy, cyclo-Pentoxy, n-Hexoxy und n-Octoxy, C₁-C₂₀-Alkoxy weiter darüber hinaus beispielsweise für Adamantoxy, die isomeren Menthoxy-Reste, n-Decoxy und n-Dodecoxy.

C₁-C₄-Alkylen steht beispielsweise für Methylen, 1,1-Ethylen, 1,2-Ethylen, 1,1-Propylen, 1,3-Propylen, 1,4-Butylen, C₁-C₈-Alkylen darüber hinaus beispielsweise für 1,2-cyclo-Hexylen und 1,2-cyclo-Pentylen.

C₂-C₈-Alkenylen steht beispielsweise für 1,1-Ethenylen 2-Ethoxy-1,1-ethenylen und 2-Methoxy-1,1-ethenylen.

**Halogenalkyl,** beziehungsweise **Halogenalkoxy**, beziehungsweise **Halogenalkylen** bedeutet jeweils unabhängig einen geradkettigen, cyclischen, verzweigten oder unverzweigten Alkyl-Rest beziehungsweise Alkylen-Rest, der einfach, mehrfach oder vollständig durch Halogenatome substituiert ist.

Beispielsweise steht C₁-C₂₀-Halogenalkyl für Trifluormethyl, Chlormethyl, 2-Chlorethyl, 2,2,2-Trifluorethyl, Pentafluorethyl, Nonafluorbutyl, Heptafluorisopropyl, Perfluoroctyl, Perfluordodecyl und Perfluorhexadecyl.

Aryl steht jeweils unabhängig für einen heteroaromatischen Rest mit 5 bis 14 Gerüstkohlenstoffatomen, in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, oder und vorzugsweise für einen carbocyclischen aromatischen Rest mit 6 bis 14 Gerüstkohlenstoffatomen.

Beispiele für carbocyclische aromatische Reste mit 6 bis 14 Gerüstkohlenstoffatomen sind zum Beispiel Phenyl, Biphenyl, Naphtyl, Phenanthrenyl, Anthracenyl oder Fluorenyl, heteroaromatische Reste mit 5 bis 14 Gerüstkohlenstoffatomen in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, sind beispielsweise Pyridinyl, Oxazolyl, Benzofuranyl, Dibenzofuran-yl oder Chinolinyl.

Weiterhin kann der carbocyclische aromatische Rest oder heteroaromatische Rest mit bis zu fünf gleichen oder verschiedenen Substituenten pro Cyclus substituiert sein, die beispielsweise ausgewählt sind aus der Gruppe Nitro, Cyano, Chlor, Fluor, C₁-C₁₂-Alkyl, C₁-C₁₂-Halogenalkyl, C₁-C₁₂-Halogenalkoxy, C₁-C₁₂-Halogenalkylthio, C₁-C₁₂-Alkoxy, Di(C₁-C₈-alkyl)amino oder Tri(C₁-C₆-alkyl)siloxyl substituiert sein.

**Arylen** steht für einen Aryl-Rest, der eine weitere Bindungsstelle am aromatischen Gerüst besitzt und dadurch divalent ist.

**Arylalkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

**Arylalkylen** steht für einen Arylalkyl-Rest, der eine weitere Bindungsstelle am aromatischen Gerüst besitzt und dadurch divalent ist.

Im Folgenden werden Vorzugsbereiche für Verbindungen der Formel (I) definiert: 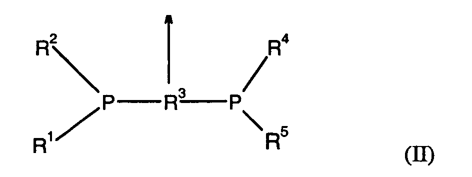 in der 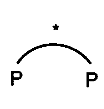 steht bevorzugt für eine enantiomerenangereicherte, chirale Verbindung der Formel (II)
- R¹, R², R⁴ und R⁵: jeweils unabhängig voneinander für C₁-C₈-Alkyl, C₅SC₁₅-Arylalkyl oder C₄-C₁₄-Aryl stehen oder PR¹R¹² bzw. PR⁴R⁵ als Ganzes für einen cyclischen Phosphinorest mit insgesamt 4 bis 20 Kohlenstoffatomen stehen und
- R³: für einen trivalenten Rest mit 2 bis 30 Kohlenstoffatomen steht und
- **→**: die kovalente Bindung von R³ zum Linker anzeigt.

Bevorzugte Verbindungen der Formel (II) sind solche, in der
- R¹, R², R⁴ und R⁵: jeweils unabhängig voneinander für C₁-C₈-Alkyl, C₅-C₁₅-Arylalkyl oder C₄-C₁₄-Aryl stehen oder PR¹R² bzw. PR⁴R⁵ als Ganzes für einen 5- oder 6-gliedrigen Phosphinorest steht und

R³ für einen Rest steht, der ausgewählt ist aus der Gruppe C₂-C₈-Alkylen, das gegebenenfalls einfach oder zweifach durch C₄-C₁₄-Arylreste weiter substituiert sein kann, C₅-C₁₅-Arylalkylen, C₄-C₁₄-Arylen, Bis-(C₄-C₁₄-arylen), gegebenenfalls substituiertes 1,1'-Ferrocenylen oder gegebenenfalls substituiertes 1,2-Ferrocenylen und der neben den beiden Gruppen PR¹R² und PR⁴R⁵ auch den Linker trägt.

Besonders bevorzugte Verbindungen der Formel (II) sind solche der Formel (III), 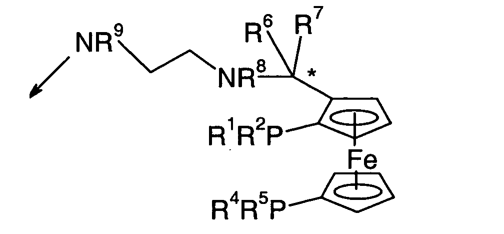 in der
- →: die Bindung zum Linker markiert und
- R¹, R², R⁴ und R⁵: jeweils unabhängig voneinander, vorzugsweise paarweise identisch, besonders bevorzugt insgesamt identisch für C₃-C₈-Alkyl, C₅-C₁₅-Arylalkyl oder C₄-C₁₄-Aryl, bevorzugt für Isopropyl, tert-Butyl, Cyclohexyl oder gegebenenfalls ein oder mehrfach durch Fluor, C₁-C₄-Alkyl, C₁-C₄-Alkyl, C₁-C₄-Halogenalkyl substituiertes Phenyl stehen und
- R⁶ und R⁷: jeweils verschieden voneinander für Wasserstoff, C₁-C₆-Alkyl, C₅-C₁₅-Arylalkyl oder C₄-C₁₄-Aryl, vorzugsweise für Wasserstoff und Methyl stehen und
- R⁸ und R⁹: jeweils unabhängig voneinander für Wasserstoff, C₁-C₆-Alkyl, C₅-C₁₅-Arylalkyl oder C₄-C₁₄-Aryl, vorzugsweise für Methyl stehen.

Träger steht bevorzugt für ein Trägermaterial mit einer Porengröße von 10 bis 250 Angström, bevorzugt 20 bis 100 Angström. Die im Rahmen der Erfindung geltenden Definitionen für die Begriffe meso- und makroporös, die Definition der Porengröße selbst, wie auch die Nomenklatur der Zeolithe sind dabei IUPAC-konform auszulegen (McCusker et al. Pure Appl. Chem, vol. 73, No. 2, pp 381-394, 2001). Geeignete Trägermaterialien sind beispielsweise Silica-Gele, Zeolithe vom Typ MOR, X, Y, MCM, ZSM, FAU, MFI, L, BEA, FER, A und SBA, sowie solche vom Typ AIPO, MAIPO und SAPO, wobei die genannten Zeolithe gegebenenfalls isomorph substituiert sein können. Besonders bevorzugt sind mesoporöse Zeolithe wie insbesondere solche des MCM-Typs wie beispielsweise MCM-41.

Bevorzugte Kombinationen Linker-Träger sind solche, die dadurch erhältlich sind, dass zunächst ein Träger an der Oberfläche in der Weise organisch modifiziert wird, dass er nach der Modifizierung eine oder mehrere Funktionalitäten aufweist (im Folgenden aktivierter Träger genannt) und über diese Funktionalitäten die Verknüpfung mit den vorstehend definierten enantiomerenangereicherten chiralen Stickstoffverbindungen erfolgt. Besonders bevorzugte Funktionalitäten sind dabei solche, die mit Aminen unter Erhöhung der Wertigkeit des Amins reagieren können (z.B. mit sekundären Aminen tertiäre Amine bilden oder mit primären Aminen sekundäre Amine bilden). Solche Funktionalitäten sind beispielsweise Chlor-, Brom- oder Iodatome, sowie Perfluoracylat- oder Sulfonat-Reste.

Die beschriebenen organischen Modifizierungen, d.h. die Herstellungsmethoden für aktivierte Träger sind hinreichend bekannt und können in an sich bekannter Weise beispielsweise durchgeführt werden durch
- Umsetzung des Trägers mit einem Chlorierungsmittel wie z.B. Tetrachlorkohlenstoff, Thionylchlorid, Titantetrachlorid oder Phosphorpentachlorid (siehe auch Beck et al. J. Am. Chem. Soc 1992, 114, 10834) und anschließende Umsetzung mit funktionalisierten Alkoholen oder Alkoxysilanen oder
- Umsetzung des Trägers mit Siliziumtetrachlorid, anschließende Umsetzung mit sekundären Aminen und weitere Umsetzung mit funktionalisierten Alkoholen oder Alkoxysilanen (siehe auch Petrucci et al. Bull. Chem. Soc. Japan, 1990, 63, 988) Silazanen oder vorzugsweise durch
- Umsetzung des Trägers mit Siliziumtetrachlorid oder Chlorsilanen des Typs SiClᵣ(C₁-C₈-Alkyl)ₛ(C₄-C₁₄-Aryl)ₜ(C₅-C₁₅-Arylalkyl)ᵤ, wobei r für eins, zwei oder drei steht und r+s+t+u = 4 ist und anschließende Umsetzung mit funktionalisierten Alkoholen, Chlorsilanen oder Alkoxysilanen.

Besonders bevorzugte aktivierte Träger sind solche, die durch Umsetzung von Trägern mit Chlorsilanen des Typs SiClᵣ(C₁-C₈-Alkyl)ₛ(C₄-C₁₄-Aryl)ₜ(C₅-C₁₅-Arylalkyl)ᵤ, wobei r für eins, zwei oder drei steht und r+s+t+u = 4 ist und anschließender Umsetzung mit funktionalisierten Alkoxysilanen oder Halogensilanen der Formeln (IIIa) oder (IIIb) erhältlich sind, wobei in Formel (III)

Hal-(C₂-C₁₂-Alkylen)-Si[O(C₁-C₈-Alkyl)]₃ (IIIa)

Hal-(C₂-C₁₂-Alkylen)-SiHal₃ (IIIb)

Hal für Chlor oder Brom steht.

Ganz besonders bevorzugte aktivierte Träger sind solche, die erhalten werden durch Umsetzung von Trägern mit Diphenyldichlorsilan und anschließende Umsetzung mit 3-Brompropyltrichlorsilan.

In Formel (I) steht weiterhin
- (M ^{m+}): vorzugsweise für Rhodium und Iridium in den formalen Oxidationsstufen +1 und +3 sowie Nickel, Palladium und Platin in den formalen Oxidationsstufen 0 und +2, sowie Ruthenium in der formalen Oxidationsstufe +2, wobei Rhodium und Iridium in der formalen Oxidationsstufen +1, sowie Nickel, Palladium und Platin in der formalen Oxidationsstufe +2 bevorzugt sind.
- L: steht bevorzugt für folgende Ligandentypen: Monoolefine wie beispielsweise Ethylen, Cycloocten und Cyclohexen, Diolefine wie beispielsweise 1,5-Cyclooctadien (cod), Norbomadien (nbd), und Butadien, Nitrile wie Acetonitril (ACN), Benzonitril und Benzylnitril, Aromaten wie Benzol, Mesitylen und Cymol, sowie anionische Liganden wie Allyl, Methylallyl, Phenylallyl, C₁-C₈-Alkylacylacetonate, C₁-C₈-Alkylacylate, Chlorid, Bromid und Iodid.
- (An ^{q-}): steht bevorzugt für nicht oder schwach koordinierende Anionen wie beispielsweise Nitrat, Perchlorat, Sulfat, Hexafluorophosphat, Hexafluoroantimonat, Hexachloroantimonat, Borate wie beispielsweise Tetrafluoroborat und Tetraphenylborat oder Sulfonate wie beispielsweise Trifluormethansulfonat und Nonafluorbutansulfonat.

Besonders bevorzugt steht 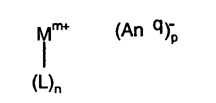 als Ganzes für folgende Fragmente: Rh(cod)BF₄, Ir(cod)BF₄, Rh(cod)PF₆, Ir(cod)PF₆, Rh(cod)SbF₆, Ir(cod)SbF₆, Rh(cod)ClO₄, Ir(cod)ClO₄, Rh(nbd)BF₄, Ir(nbd)BF₄, Rh(nbd)PF₆, Ir(nbd)PF₆, Rh(nbd)SbF₆, Rh(cod)OTf, Ir(cod)OTf, Ir(nbd)OTf, Rh(nbd)OTf, Ir(nbd)SbF₆, Rh(nbd)ClO₄, Ir(nbd)ClO₄, PdCl₂, PdBr₂, PdI₂, Pd(Allyl)BF₄, Pd(Allyl)PF₆ und Pd(ACN)₂(BF₄)₂.

Ganz besonders bevorzugte Verbindungen der Formel (I) sind solche der Formel (Ia) 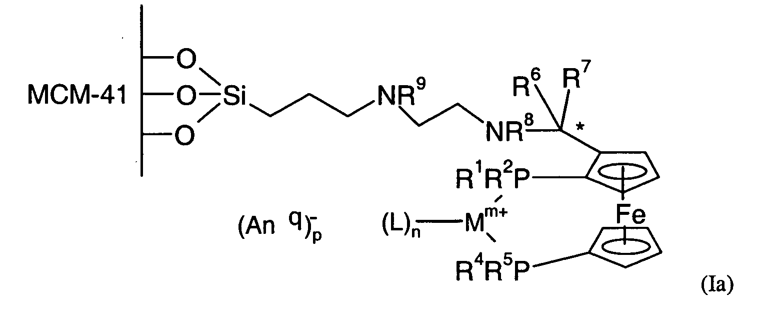 in der R¹ bis R⁹ die vorstehend angegebenen Bedeutungen einschließlich ihrer Vorzugsbereiche besitzen und

(An ^{q})⁻ₚ (L)ₙ―M^{m+}

als Ganzes für folgende Fragmente steht: Rh(cod)BF₄, Rh(cod)PF₆, Rh(cod)ClO₄, Rh(nbd)BF₄, Rh(nbd)PF₆, Rh(cod)OTf, Rh(nbd)OTf, PdCl₂, PdBr₂ und PdI₂, wobei PdCl₂ noch weiter bevorzugt ist.

Zur Herstellung der Verbindungen der Formel (I) geht man vorzugsweise so vor, dass
in einem Schritt A)
- gegebenenfalls in Gegenwart eines organischen Lösungsmittels
- aktivierte Träger der Formel (IV)

   Akt-Linker-Träger (IV)

   in der Linker und Träger die unter der Formel (I) genannten Bedeutungen und Vorzugsbereiche besitzen und
   - Akt: für Chlor, Brom, Iod oder ein Sulfonat, vorzugsweise für Chlor oder Brom steht
- mit enantiomerenangereicherten, chiralen Diphosphorverbindungen der Formel (II) umsetzt, 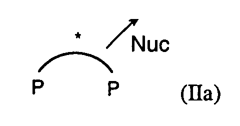 wobei 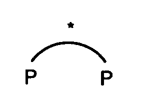 für eine enantiomerenangereicherte, chirale Diphosphorverbindung steht für die weiterhin die vorstehend genannten Vorzugsbereiche gelten und 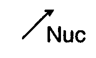 eine nucleophile Funktionalität der enantiomerenangereicherten, chiralen Diphosphorverbindung steht, die unter Reaktion mit der Gruppe "Akt" der Verbindung der Formel (IV) eine kovalente Bindung der enantiomerenangereicherten, chiralen Diphosphorverbindung mit dem Linker ermöglicht
   und in einem Schritt B)
   - die auf diese Weise erhaltenen Verbindungen der Formel (V) 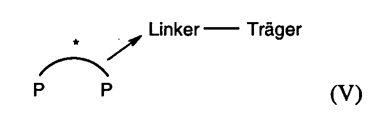
   - gegebenenfalls in Gegenwart eines organischen Lösungsmittels mit Übergangsmetallverbindungen zu Verbindungen der Formel (I) umgesetzt werden.
Anhand der Verbindungen der Formel (Ia) sei dies noch einmal beispielhaft aber nicht beschränkend verdeutlicht:
Im Schritt A*)
werden zunächst Verbindungen der Formel (VIa) 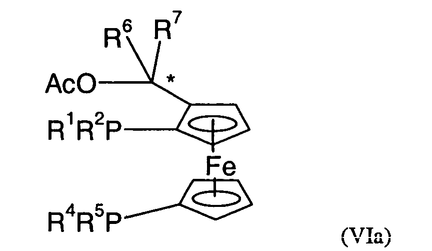 in an sich bekannter Weise mit Diaminen der Formel (VIb) 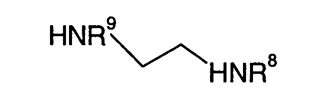 zu Verbindungen der Formel (VII) umgesetzt 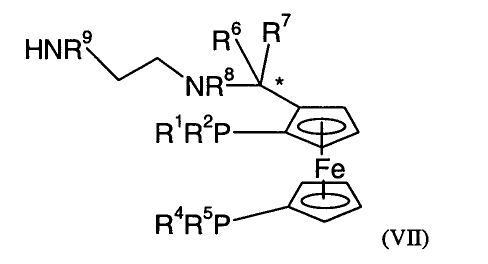 und anschließend
die Verbindungen der Formel (VII)
durch Umsetzung mit aktiviertem Träger der schematisierten Formel (IVa) 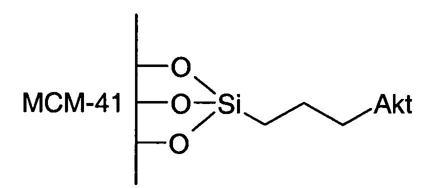 in Verbindungen der Formel (IIa) überführt 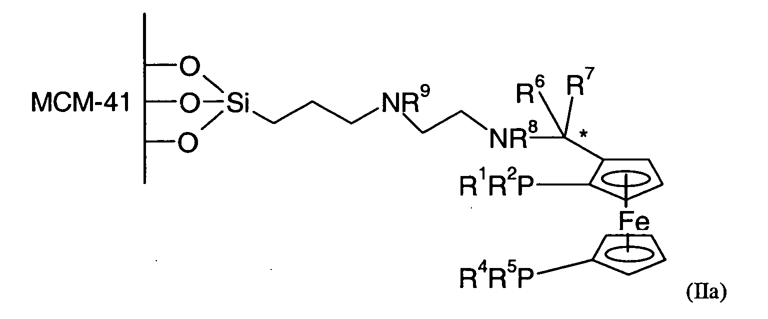 und
im Schritt B*)
die Verbindungen der Formel (IIa) mit Übergangsmetallverbindungen in Verbindungen der Formel (Ia) überführt.

Die Verbindungen der Formel (VIa) sind beispielsweise gemäß Hayashi et al., Bull. Chem. Soc. Jap., 1980, 53,1138 und Gokel et al., J. Chem. Edu., 1972, 49, 294 oder analog dazu erfolgen.

Die Verbindungen der Formel (VII) und (IIa) sind von der Erfindung als wertvolle Intermediate ebenfalls umfasst, wobei vorstehend angegebenen Vorzugsbereiche in gleicher Weise gelten.

Für die Herstellung von Verbindungen der Formel (I) bevorzugte Übergangsmetallverbindungen sind solche der Formel (VIIIa)

M¹(An¹)ₚ₁ (VIIIa)

in der
- M¹: für Ruthenium, Rhodium, Iridium, Nickel, Palladium oder Platin und
- An¹: für Chlorid, Bromid, Acetat, Nitrat, Methansulfonat, Trifluormethansulfonat oder Acetylacetonat und
- P¹: für Ruthenium, Rhodium und Iridium für 3, für Nickel, Palladium und Platin für 2 steht,
oder Übergangsmetallverbindungen der Formel (VIIIb)

M²(An²)ₚ₂L¹ ₂ (VIIIb)

in der
- M²: für Ruthenium, Rhodium, Iridium, Nickel, Palladium oder Platin und
- An²: für Chlorid, Bromid, Acetat, Methansulfonat, Trifluormethansulfonat, Tetrafluoroborat, Hexafluorophosphat Perchlorat, Hexafluoroantimonat, Tetra(bis-3,5-trifluormethylphenyl)borat oder Tetraphenylborat steht und
- P²: für Rhodium und Iridium für 1, für Nickel, Palladium, Platin und Ruthenium für 2 steht und
- L¹: jeweils für ein C₂-C₁₂-Alken wie beispielsweise Ethylen oder Cycloocten, oder ein Nitril wie beispielsweise Acetonitril, Benzonitril oder Benzylnitril steht, oder
- L¹₂: zusammen für ein (C₄-C₁₂)-Dien wie beispielsweise Norbornadien oder 1,5-Cyclooctadien steht
oder Übergangsmetallverbindungen der Formel (VIIIc)

[M³L²An³ ₂]₂ (VIIIc)

in der
- M³: für Ruthenium und
- L²: für cod, nbd, Allyl, Methylallyl oder Arylreste wie zum Beispiel Cymol, Mesitylen, Benzol und
- An³: für Chlorid, Bromid, Acetat, Methansulfonat, Trifluormethansulfonat, Tetrafluoroborat, Hexafluorophosphat Perchlorat, Hexafluoroantimonat, Tetra(bis-3,5-trifluormethylphenyl)borat oder Tetraphenylborat steht
oder Übergangsmetallverbindungen der Formel (VIIId)

M⁴ ₚ₃[M⁵(An³)₄] (VIIId),

wobei
- M⁵: für Palladium, Nickel, Iridium oder Rhodium und
- An³: für Chlorid oder Bromid steht und
- M⁴: für Lithium, Natrium, Kalium, Ammonium oder organisches Ammonium steht und
- P³: für Rhodium und Iridium für 3, für Nickel, Palladium und Platin für 2 steht,
oder Übergangsmetallverbindungen der Formel (VIIIe)

[M⁶ (L³)₂]An⁴ (VIIIe),

wobei
- M⁶: für Iridium oder Rhodium und
- L³: für ein (C₄-C₁₂)-Dien wie beispielsweise Norbornadien oder 1,5-Cyclooctadien steht und
- An⁴: für ein nicht oder schwach koordinierendes Anion wie zum Beispiel Methansulfonat, Trifluormethansulfonat, Tetrafluoroborat, Hexafluoro-phosphat Perchlorat, Hexafluoroantimonat, Tetra(bis-3,5-trifluormethylphenyl)borat oder Tetraphenylborat steht.

Darüber hinaus sind als Übergangsmetallverbindungen beispielsweise Ni(cod)₂, Pd₂(dibenzylidenaceton)₃, Cyclopentadienyl₂Ru, Rh(acetylacetonat)(CO)₂, Ir(pyridin)₂(cod)OTf oder mehrkernige verbrückte Komplexe wie beispielsweise [Pd(Allyl)Cl]₂, [Pd(Allyl)Br]₂, [Rh(cod)Cl]₂, [Rh(cod)Br]₂, [Rh(Ethen)₂Cl]₂, [Rh(Cycloocten)₂Cl]₂, [Ir(cod)Cl]₂ und [Ir(cod)Br]₂, [Ir(Ethen)₂Cl]₂ und [Ir(Cycloocten)₂Cl]₂ geeignet.

Besonders bevorzugte Übergangsmetallverbindungen sind solche, die bei Umsetzung mit Verbindungen der Formel (II) die obenstehend genannten und bevorzugten Fragmente erzeugen können.

Als organische Lösungsmittel für die Schritte A) und B) eignen sich üblicherweise aliphatische oder aromatische, gegebenenfalls halogenierte Kohlenwasserstoffe, wie beispielsweise Petrolether, Benzol, Toluol, die isomeren Xylole, Chlorbenzol, die isomeren Dichlorbenzole, Hexan, Cyclohexan, Dichlormethan oder Chloroform sowie vorzugsweise Ether, wie Diethylether, Diisopropylether, Dioxan, Tetrahydrofuran, Methyl-tert.-butylether oder Ethylenglykoldimethyloder -diethylether. Besonders bevorzugte organische Lösungsmittel sind Toluol, Diethylether, Tetrahydrofuran und Methyl-tert.-butylether.

Das Gewichtsverhältnis von enantiomerenangereichterten chiralen Diphosphorverbindungen zu aktiviertem Träger kann beispielsweise und bevorzugt 0,02:1 bis 100:1, besonders bevorzugt 0,1:1 bis 5:1 und ganz besonders bevorzugt 0,1:1 1 bis 1:1 1 betragen. Der Einsatz größerer Mengen von enantiomerenangereichterten chiralen Diphosphorverbindungen ist möglich aber unwirtschaftlich.

Das Gewichtsverhältnis von Übergangsmetallverbindung zu Verbindungen der Formel (II) kann beispielsweise und bevorzugt 0,005:1 bis 1:1, besonders bevorzugt 0,01:1 bis 0,2:1 und ganz besonders bevorzugt 0,02: 1 bis 0,1:1 betragen.

Im Schritt B) beträgt die Reaktionstemperatur beispielsweise und bevorzugt -20°C bis 80°C, besonders bevorzugt 0 bis 60°C.

Die Aufarbeitung von Verbindungen der Formel (I) kann in an sich bekannter Weise durch Filtration und/oder Zentrifugation und/oder Sedimentation und gegebenenfalls anschließendem Waschen mit organischem Lösungsmittel erfolgen, wobei das Waschen beispielsweise diskontinuierlich oder kontinuierlich durchgeführt werden kann. Zu Lagerzwecken werden die Verbindungen der Formel (I) vorzugsweise getrocknet.

Die Verbindungen der Formel (I) können direkt als Katalysator für asymmetrische Reaktionen eingesetzt werden.

Von der Erfindung sind daher auch Katalysatoren umfasst, die Verbindungen der Formel (I) enthalten.

Weiterhin ist von der Erfindung ein Verfahren zur katalytischen Herstellung von enantiomerenangereicherten Verbindungen umfasst, das dadurch gekennzeichnet ist, dass als Katalysatoren solche eingesetzt werden, die Verbindungen der Formel (I) enthalten.

Bevorzugte Verfahren zur Herstellung von enantiomerenangereicherten Verbindungen sind asymmetrische nucleophile Substitutionen an Allylverbindungen und asymmetrische Hydrierungen, wie beispielsweise Hydrierungen von prochiralen C=C-Bindungen wie prochiralen Enaminen, Olefinen, Enolethern; C=O-Bindungen wie prochiralen Ketonen und C=N-Bindungen wie prochiralen Iminen. Besonders bevorzugte asymmetrische Hydrierungen sind Hydrierungen von prochiralen Ketonen wie insbesondere Ketocarbonsäureestern.

Bevorzugte Ketocarbonsäureester sind Verbindungen der Formel (IX), 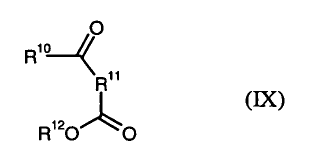 in der
- R¹⁰ und R¹²: jeweils unabhängig voneinander für C₁-C₁₂-Alkyl, C₁-C₁₂-Halogenalkyl, C₅-C₁₅-Arylalkyl oder C₄-C₁₄-Aryl stehen und
- R¹¹: fehlt oder für 1, 1-(C₁-C₄-Alkylen) steht.

Vorzugsweise stehen
R¹⁰ und R¹² jeweils unabhängig voneinander für C₁-C₄-Alkyl oder Phenyl und
R¹¹ für Methylen oder fehlt.

Besonders bevorzugte Verbindungen der Formel (IX) sind Phenylglyoxylsäuremethylester und Chloracetessigester.

Durch erfindungsgemäße Hydrierung von Ketocarbonsäureestern sind enantiomerenangereicherte Verbindungen der Formel (X) erhältlich, 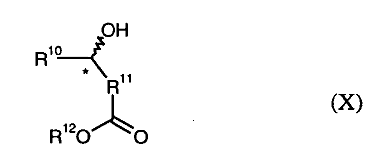 in der
* ein stereogenes Zentrum markiert, das S oder R-konfiguriert ist und
R¹⁰, R¹¹ und R¹² die unter der Formel (IX) angegebenen Bedeutungen und Vorzugsbereiche besitzen.

Die erfindungsgemäß herstellbaren Verbindungen eignen sich insbesondere als Racematspaltungsreagenzien oder in einem Verfahren zur Herstellung von Arzneimitteln oder Agrochemikalien.

In einer bevorzugten Ausführungsform von erfindungsgemäßen asymmetrischen Hydrierungen beträgt die Reaktionstemperatur 0 bis 150°C, bevorzugt 20 bis 100°C, der Wasserstoffpartialdruck beispielsweise 0,1 bis 200 bar, bevorzugt 1 bis 100 bar und besonders bevorzugt 5 bis 30 bar.

Als Lösungsmittel für erfindungsgemäße asymmetrische Hydrierungen eignen sich insbesondere Alkohole wie Methanol, Ethanol und Iso-Propanol, aliphatische oder aromatische, gegebenenfalls halogenierte Kohlenwasserstoffe, wie beispielsweise Petrolether, Benzol, Toluol, die isomeren Xylole, Chlorbenzol, die isomeren Dichlorbenzole, Hexan, Cyclohexan, Dichlormethan oder Chloroform und besonders bevorzugt Ether, wie Diethylether, Diisopropylether, Dioxan, Tetrahydrofuran, Methyl-tert.-butylether oder Ethylenglykoldimethyl- oder -diethylether gegebenenfalls in Mischung mit Alkoholen wie Methanol, Ethanol und Iso-Propanol. Auch andere Mischungen der genannten Lösungsmittel sind einsetzbar.

Der pH-Wert bei der Hydrierung bezogen auf Raumtemperatur und wässrige Vergleichsskala kann beispielsweise bei 2 bis 13, bevorzugt bei 4 bis 12 und besonders bevorzugt bei 6 bis 12 liegen.

Das Gewichtsverhältnis von Verbindungen der Formel (I) zu Substrat kann beispielsweise 1:1 bis 1:10000 betragen, bevorzugt ist 1:5 bis 1:1000.

Der Vorteil der vorliegenden Erfindung ist, dass auf effiziente Weise heterogene Katalysatoren in hohen Ausbeuten hergestellt werden können und diese Katalysatoren hohe Umsätze und Enantioselektivitäten in asymmetrischen Synthesen erlauben.

### Beispiele

### Beispiel 1

### Herstellung von aktiviertem MCM-41

Zu getrocknetem, calciniertem MCM-41 (2.0 g) in THF (15 ml) wurde Dichlordiphenylsilan (0.148 g) gegeben und für eine Stunde gerührt. Die Lösung wurde dann auf - 78 °C abgekühlt und mit 3-Brompropyltrichlorsilan (1.80 g) versetzt. Es wurde langsam auf Raumtemperatur erwärmen gelassen und weitere 8 Stunden gerührt. Anschließend wurde eine Stunde bei 50°C gerührt. Der aktivierte Träger MCM-41 wurde abfiltriert und durch Soxhlet-Extraktion unter Verwendung von THF gereinigt. Abschließend wurde im Vakuum getrocknet.
¹³C MAS NMR: δ 10.21 (SiCH₂), 26.39 (CCH₂C), 34.28 (CCH₂Br), 125.94, 150.69 (SiC₆H₅) ppm;
Elementaranalyse: C: 2.04, H: 0.63, Br: 3.50 %.

### Beispiel 2

### Herstellung von (S)-1-[(R)-1',2-bis(Diphenylphosphino)ferrocenyl]-ethyl-N,N'-dimethylethylendiamin

2,0 g *N,N'*-Dimethylethylendiamin wurden 5h unter Rückfluss mit 0,5 g [(R)-1-[(S)-1',2-*bis*-(diphenylphosphino)ferrocenyl]-ethylacetate] in Methanol als Lösungsmittel erhitzt und man erhielt nach Abziehen des Lösungsmittels und des überschüssigen Diamins das gewünschte Produkt in nahezu quantitativer Ausbeute.

### Beispiel 3

### Herstellung von immobilisiertem (S)-1-[(R)-1',2-bis(Diphenylphosphino)-ferrocenyl]-ethyl-N,N'-dimethyl-ethylendiamin

(S)-1-[(R)-1',2-*bis*(Diphenylphosphino)-ferrocenyl]-ethyl-*N,N*'-dimethyl-ethylendiamin (0.615g) wurde zu einer Suspension von getrocknetem und aktiviertem MCM-41 aus Beispiel 1 (2.0g) in THF (20ml) gegeben und die Mischung für etwas 18h gerührt. Das gewünschte Produkt wurde durch Filtration und Soxhlet Extraktion mit Dichlormethan erhalten.
¹³C MAS NMR: δ 10.1 (SiCH₂ und CHCH₃), 27.8 (CCH₂C), 30 - 45 (NCH₃), 45 - 55 (NCH₂), 59.5 (CHCH₃), 73.6 (C₅H₃FeC₅H₄), 129.8 (C₆H₅) ppm;
³¹P MAS NMR: δ -23.25 (C₅H₃P), -17.31 (C₅H₄P) ppm;
Elementaranalyse: C: 14.01, H: 0.63, N: 1.61, P: 1.16, Br: 3.75 %.

### Beispiel 4

### Herstellung von immobilisiertem, Palladium-komplexiertem (S)-1-[(R)-1',2-bis(Diphenylphosphino)-ferrocenyl]-ethyl-N,N'-dimethyl-ethylendiamin

Immobilisiertes (S)-1-[(R)-1',2-*bis*(Diphenylphosphino)-ferrocenyl]-ethyl-*N,N'*-dimethyl-ethylendiamin (2,0 g) aus Beispiel 3 wurde in THF (10ml) suspendiert und mit PdCl₂ (0.148 g) versetzt. Nach Zugabe von 5 Tropfen Acetonitril wurde die Reaktionsmischung zunächst für 10 Stunden bei Raumtemperatur dann für eine Stunde bei 50°C gerührt. Anschließend wurden 2 ml Acetonitril zugesetzt und die Reaktionsmischung bei Raumtemperatur für eine weitere Stunde gerührt um bis dahin ungelöstes PdCl₂ zu lösen. Anschließend wurde filtriert, mit THF und Dichlormethan solange gewaschen, bis die Lösungsmittel farblos waren und das gewünschte Produkt durch Soxhlet Extraktion mit Dichlormethan weiter gereinigt. Abschließend wurde im Vakuum getrocknet und das Produkt als schwach rotes Pulver erhalten.
¹³C MAS NMR: δ 11.7 (SiCH₂ und CHCH₃), 27.4 (CCH₂C), 32 - 43 (NCH₃), 47 - 60 (NCH₂ and CHCH₃), 75.5 (C₅H₃FeC₅H₄), 131.1 (C₆H₅) ppm;
³¹P MAS NMR: δ 15.9 (C₅H₄P *trans* N), 34.4 (C₅H₃P *trans* Cl) ppm;
Elementaranalyse: C: 12.37; H: 1.86; N: 1.37; P: 1.05; Br: 2.73; Cl: 3.05; Fe 0.81 %.

### Beispiel 5

### Herstellung von immobilisiertem, Rhodium-komplexiertem (S)-1-[(R)-1',2-bis(Diphenylphosphino)-ferrocenyl]-ethyl-N,N'-dimethyl-ethylendiamin

Es wurde analog zu Beispiel 4 gearbeitet jedoch unter Verwendung von Rh(cod)₂BF₄ und unter Fortlassung von Acetonitril.

### Beispiele 6 bis 12:

### Allgemeine Arbeitsvorschrift für die Verwendung der Katalysatoren in Hydrierungen

Die asymmetrischen Hydrierungen wurden in einem Hochdruckautoklaven aus rostfreiem Edelstahl mit einem Volumen von 150 ml durchgeführt. Jeweils 50 mg der immoblilisierten Katalysatoren aus den Beispielen 4 und 5 wurden unter Inertatmossphäre in den Hochdruckautoklaven transferiert.

Phenylglyoxylsäuremethylester (1 g), das Lösungsmittel und ein interner Standard (Cyclododecan) wurden zugegeben und der Hochdruckautoklav verschlossen. Der Hochdruckautoklav und seine Zu- und Ableitungen wurden anschließend durch dreimaliges Spülen mit Stickstoff inertisiert und zur Prüfung der Dichtigkeit schließlich unter einen Wasserstoffdruck von 5 bar gesetzt. Anschließend wurde der Wasserstoffdruck gegebenenfalls erhöht, der Hochdruckautoklav auf Reaktionstemperatur gebracht und der Inhalt mit einem mechanischen Rührer gerührt.

Über ein miniaturisiertes automatisches Entnahmeventil wurden Proben des Inhalts entnommen um den Verlauf der Reaktion untersuchen zu können. Am Ende der Reaktion wurde der Hochdruckautoklav zwei Stunden im Eisbad gekühlt, entspannt und die Produkte durch Gaschromatographie (GC, Varian, Model 3400 CX) über eine chirale Säule identifiziert (Chiraldex, 20 m x 0.25 mm).

Die Ergebnisse der Hydrierungsexperimente sind in nachstehender Tabelle zusammengefasst:

| **Beispiel** | **Katalysator aus Beispiel** | **pH** | **Temp. [°C]** | **Lösungs -mittel** | **Druck [bar]** | **Dauer [h]** | **Umsatz [%]** | **ee [%]** |
|---|---|---|---|---|---|---|---|---|
| **6** | **4** | n.g. | 50 | THF / MeOH | 20 | 5 | 65,0 | n.g. |
| **7** | **4** | n.g. | 50 | THF / MeOH | 25 | 5 | 90,0 | n.g. |
| 8 | 4 | n.g. | 50 | THF / MeOH | 20 | 5 | 65,0 | 50,0 |
| 9 | 4 | n.g. | 50 | THF / MeOH | 25 | 5 | 90,0 | 54,0 |
| 10 | 4 | 7 | 50 | THF / MeOH | 20 | 5 | 68,0 | n.g. |
| 11 | 4 | 12 | 50 | THF / MeOH | 20 | 5 | 92,0 | n.g. |
| 12 | 5 | 12 | 50 | THF / MeOH | 20 | 5 | 78,0 | n.g. |

n.g. = nicht gemessen

## Patentansprüche

1. Verbindungen der Formel (I), 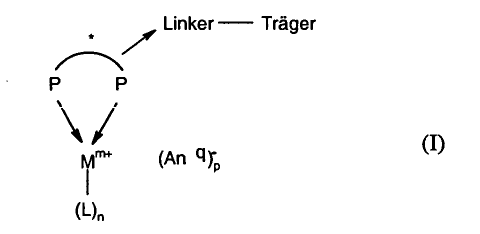 in der 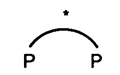 für eine enantiomerenangereicherte, chirale Diphosphorverbindung steht,
→ eine kovalente Bindung der enantiomerenangereicherten, chiralen Diphosphorverbindung zum Linker anzeigt,
Linker für einen Rest steht, der sowohl kovalent an enantiomerenangereicherte, chirale Verbindung als auch an den Träger gebunden ist,
Träger für ein meso- oder makroporöses Trägermaterial steht,
(M ^{m+}) für ein Metall mit der Wertigkeit m steht
L für einen anionischen oder neutralen Liganden steht
n für eins, zwei, drei oder vier steht
(An ^{q-}) für ein Anion mit der Wertigkeit q steht und
P (m - Gesamtladung der anionischen Liganden L)/q ist.

2. Verbindungen nach Anspruch 1, **dadurch gekennzeichnet, dass** 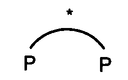 für eine enantiomerenangereicherte, chirale Verbindung der Formel (II)
steht, 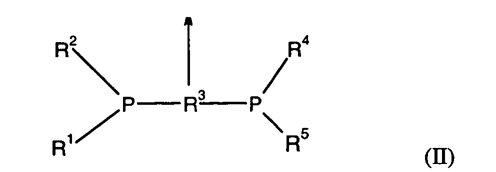 in der
R¹, R², R⁴ und R⁵ jeweils unabhängig voneinander für C₁-C₈-Alkyl, C₅-C₁₅-Arylalkyl oder C₄-C₁₄-Aryl stehen oder PR¹R² bzw. PR⁴R⁵ als Ganzes für einen cyclischen Phosphinorest mit insgesamt 4 bis 20 Kohlenstoffatomen stehen und
R³ für einen trivalenten Rest mit 2 bis 30 Kohlenstoffatomen steht und
**→** die kovalente Bindung von R³ zum Linker anzeigt.

3. Verbindungen nach Anspruch 2, **dadurch gekennzeichnet, dass** R¹, R², R⁴ und R⁵ jeweils unabhängig voneinander für C₁-C₈-Alkyl, C₅-C,₅-Arylalkyl oder C₄-C₁₄-Aryl stehen oder PR¹R² bzw. PR⁴R⁵ als Ganzes für einen 5- oder 6-gliedrigen Phosphinorest steht und R³ für einen Rest steht, der ausgewählt ist aus der Gruppe C₂-C₈-Alkylen, das gegebenenfalls einfach oder zweifach durch C₄-C₁₄-Arylreste weiter substituiert sein kann, C₅-C₁₅-Arylalkylen, C₄-C₁₄-Arylen, Bis-(C₄-C₁₄-arylen), gegebenenfalls substituiertes 1,1'-Ferrocenylen oder gegebenenfalls substituiertes 1,2-Ferrocenylen und der neben den beiden Gruppen PR¹R² und PR⁴R⁵ auch den Linker trägt.

4. Verbindungen nach Anspruch 2 oder 3, **dadurch gekennzeichnet, dass** Verbindungen der Formel (II) solche der Formel (III) sind, 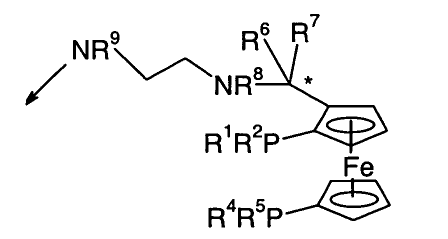 in der
**→** die Bindung zum Linker markiert,
R¹, R², R⁴ und R⁵ jeweils unabhängig voneinander, vorzugsweise paarweise identisch, besonders bevorzugt insgesamt identisch für C₃-C₈-Alkyl, C₅-C₁₅-Arylalkyl oder C₄-C₁₄-Aryl, bevorzugt für Isopropyl, tert-Butyl, Cyclohexyl oder gegebenenfalls ein oder mehrfach durch Fluor, C₁-C₄-Alkyl, C₁-C₄-Alkyl, C₁-C₄-Halogenalkyl substituiertes Phenyl stehen und
R⁶ und R⁷ jeweils verschieden voneinander für Wasserstoff, C₁-C₆-Alkyl, C₅-C₁₅-Arylalkyl oder C₄-C₁₄-Aryl, vorzugsweise für Wasserstoff und Methyl stehen und
R⁸ und R⁹ jeweils unabhängig voneinander für Wasserstoff, C₁-C₆-Alkyl, C₅-C₁₅-Arylalkyl oder C₄-C₁₄-Aryl, vorzugsweise für Methyl stehen.

5. Verbindungen nach mindestens einem der Ansprüche 1 bis 4, **dadurch gekennzeichnet, dass** "Träger" für ein Trägermaterial mit einer Porengröße von 10 bis 250 Angström steht.

6. Verbindungen nach mindestens einem der Ansprüche 1 bis 5, **dadurch gekennzeichnet, dass** (M ^{m+}) für Rhodium und Iridium in den formalen Oxidationsstufen +1 und +3 sowie Nickel, Palladium und Platin in den formalen Oxidationsstufen 0 und +2, sowie Ruthenium in der formalen Oxidationsstufe +2 steht.

7. Verbindungen nach mindestens einem der Ansprüche 1 bis 6, **dadurch gekennzeichnet, dass** es sich um solche der Formel (Ia) handelt 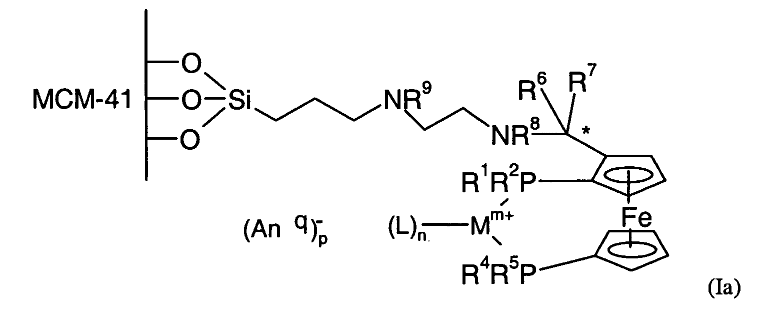 in der R¹ bis R⁹ die unter Anspruch 4 genannte Bedeutung besitzen und
(An ^{q})⁻ₚ- (L)ₙ―M^{m+}
als Ganzes für folgende Fragmente steht: Rh(cod)BF₄, Rh(cod)PF₆, Rh(cod)ClO₄, Rh(nbd)BF₄, Rh(nbd)PF₆, Rh(cod)OTf, Rh(nbd)OTf PdCl₂, PdBr₂ und PdI₂.

8. Verbindungen der Formel (VII) 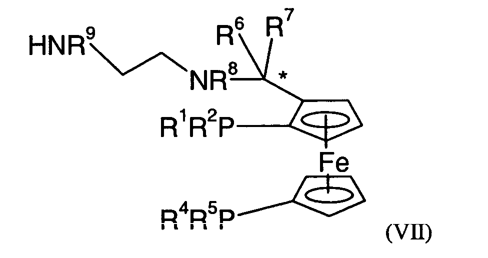 in der R¹ bis R⁹ die unter Anspruch 4 genannte Bedeutung besitzen.

9. Verbindungen der Formel (IIa) 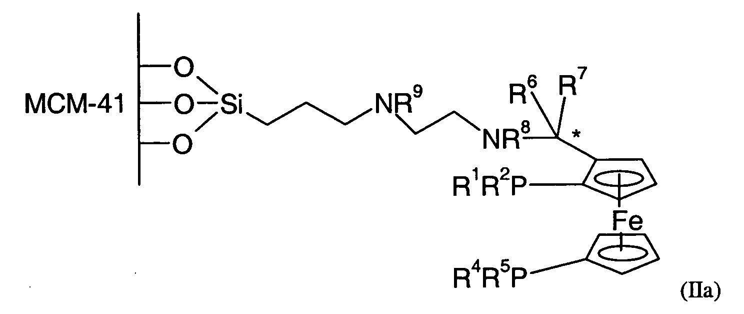 in der R¹ bis R⁹ die unter Anspruch 4 genannte Bedeutung besitzen.

10. Katalysatoren enthaltend Verbindungen der Formel (I) gemäß einem oder mehreren der Ansprüche 1 bis 7.

11. Verfahren zur katalytischen Herstellung von enantiomerenangereicherten Verbindungen, **dadurch gekennzeichnet, dass** als Katalysatoren solche eingesetzt werden, die Verbindungen gemäß einem oder mehreren der Ansprüche 1 bis 7 enthalten.

12. Verfahren nach Anspruch 11, **dadurch gekennzeichnet, dass** Verfahren zur Herstellung von enantiomerenangereicherten Verbindungen asymmetrische nucleophile Substitutionen an Allylverbindungen und asymmetrische Hydrierungen sind.

13. Verwendung von enantiomerenangereicherten Verbindungen die nach einem Verfahren gemäß Anspruche 11 oder 12 hergestellt wurden zur Herstellung von Arzneimitteln oder Agrochemikalien.
